# EUROPEAN PATENT APPLICATION

(11) **EP 4 775 297 A1**
(43) Date of publication of application: **15.07.2026**
(21) Application number: 25151756.1
(22) Date of filing: 14.01.2025
(51) Int. Cl.: B01D 63/08, H01M 8/04119

(54) **STACK PLATE DEVICE FOR A HUMIDIFIER AND HUMIDIFIER**

(71) Applicant: MANN+HUMMEL GmbH, 71636 Ludwigsburg (DE)
(72) Inventor: VOCA, Oliver, 71636 Ludwigsburg (DE); TESCHNER, Matthias, 71636 Ludwigsburg (DE); FRANK, Michael, 71636 Ludwigsburg (DE); KORN, Alexander, 71636 Ludwigsburg (DE); TRAUTMANN, Pius, 71636 Ludwigsburg (DE)
(74) Representative: Mann + Hummel Intellectual Property

(57) **Abstract**

A stack plate device (400) for a humidifier (1000), in particular for a fuel cell system, comprises stack plates (100) being stacked one on top of each other in a stacking direction (500), adjacent ones of the stack plates (100) being alternately rotated around a central axis (510), with a top side (126) of one stack plate (100) facing a bottom side (125) of an adjacent stack plate (100), each of the stack plates (100) comprising a peripheral frame (120), the peripheral frame (120) enclosing a through-opening (130) and comprising an inflow region (402) and an outflow region (404) opposing the inflow region (402) that are transverse to the stacking direction (500). The peripheral frame (120) of each of the stack plates (100) comprises inner connecting elements (140) and outer connecting elements (150).

## Description

### Technical Field

Embodiments relate to a stack plate device for a humidifier, in particular for a fuel cell system, as well as a humidifier for a fuel cell system.

### Background Art

In a humidifier, water vapor from the exhaust air of a fuel cell system is transferred to the supply air with several flat semi-permeable layers, e.g. water-permeable membranes, connected in parallel to protect the fuel cell membrane from drying out. The flat semi-permeable layers are installed in a stack consisting of individual layers (stack plates, seals and semi-permeable layers). A single stack can consist of a plurality of stack plates installed in a housing.

EP 4 421 923 A1 discloses a stack plate device for a humidifier, in particular for a fuel cell system, having a plurality of first and second stack plates being stacked one on top of each other alternately in a stacking direction, with top sides of first stack plates facing bottom sides of second stack plates and top sides of second stack plates facing bottom sides of first stack plates, and each stack plate comprising a peripheral frame that encloses a through-opening and has an inflow region and an outflow region. At least first and second groups of flow channels are formed in the stacked stack plates, the flow channels being formed transversely to one another and being separated by semi-permeable layers, in particular moisture-permeable layers, wherein three of the alternately successive first and second stack plates each enclose two of the flow channels, the channels providing a cross flow arrangement for a first and second fluid. The first and/or second stack plates comprise a grid-like support member. The peripheral frames comprise one or more connecting elements and the connecting elements of adjacent stack plates are arranged in an interlocking manner.

US 2014/0106244 A1 discloses a water vapor transfer unit having fluid flow conduits which distribute wet or dry fluid throughout the water vapor transfer unit, which are created by forming apertures in each wet and dry plate so that when the plates are stacked, fluid flow inlet and outlet headers are integrated into the flow stack. These integrated headers negate the need for traditional wet and dry fluid inlet and outlet manifolds external to the water vapor transfer unit stack. Because the plates are stacked and sealed so that the fluid flows cannot co-mingle, the fluids are introduced directly into the stack, flow across the flow fields, and exit the stack without leakage or flow contamination. The integrated header design allows for sealing the stack on no more than a single plane defined by the stack or on no more than two parallel opposing planes and allows for accommodation of stack expansion and contraction.

### Summary

It is an object of the embodiments to provide an improved stack plate device for a humidifier, in particular for a fuel cell system.

Another object is to provide an improved humidifier for a fuel cell system with such a stack plate device.

According to an aspect of the embodiments the object is achieved by a stack plate device for a humidifier, in particular for a fuel cell system, the stack plate device comprising stack plates being stacked one on top of each other in a stacking direction, adjacent ones of the stack plates being alternately rotated around a central axis, with a top side of one stack plate facing a bottom side of an adjacent stack plate, each of the stack plates comprising a peripheral frame, the peripheral frame enclosing a through-opening and comprising an inflow region and an outflow region opposing the inflow region that are transverse to the stacking direction. A first group and a second group of flow channels are disposed in the stacked stack plates and transversely to one another. The stack plate device further comprises a semi-permeable layer separating each pair of the flow channels. Three alternately successive ones of the stack plates enclose two of the flow channels, the flow channels providing a cross flow arrangement for a first fluid and a second fluid. Each of the stack plates further comprises four opposing supply channels respectively for the first fluid and the second fluid, the four pairwise opposing supply channels being disposed through the peripheral frame, a first pair of the four opposing supply channels being in fluid connection with the through-opening on the top side, and a second pair of the four opposing supply channels being sealed against the through-opening and vice versa on the bottom side. The peripheral frame of each of the stack plates comprises inner connecting elements and outer connecting elements, the outer connecting elements being arranged farther away from the through opening than the inner connecting elements, and the inner and outer connecting elements of the adjacent ones of the stack plates being arranged one on top of each other in an interlocking manner.

According to another aspect of the embodiments the further object is achieved by a humidifier for a fuel cell system, the humidifier comprising the stack plate device, and two end plates respectively enclosing the stack plate device at both ends in the stacking direction, each of the two end plates (1002, 1003) comprising a first inlet for the first fluid, in particular exhaust gas from the fuel cell system, a second inlet for the second fluid, in particular supply air to the fuel cell system, a first outlet for the first fluid. and a second outlet for the second fluid. The first group of the flow channels is fluidically connected to the first pair of the four pairwise opposing supply channels, and the second group of the flow channels is fluidically connected to the second pair of the four pairwise opposing supply channels. The first pair of the four pairwise opposing supply channels are interposed between the first inlet and the first outlet for the first fluid, and the second pair of the four pairwise opposing supply channels are interposed between the second inlet and the second outlet for the second fluid.

Advantageous embodiments are described in the dependent claims, the description and the drawings.

In the proposed stack plate device thin stack plates, preferably injection molded from polypropylene (PP), are sealed against each other by a soft seal, e.g. by a molded gasket with a diameter of about 1 mm and a Shore hardness of about 40 ShA. Other values may be selected. The resulting sealing forces are transmitted from one stack layer to the other by axially acting nubs as first connecting elements, thus preventing excessive deflection of the thin and flexible stack plates under sealing and compressive forces. An indentation on the opposite side of the adjacent stack plate ensures centering of the stacked stacking plates and a depth stop. The adjustable height is composed exclusively of tool-related dimensions that can be easily checked and adjusted. This makes it possible to control the setting tolerances when stacking hundreds of stacking plates on top of each other. This type of connecting elements is particularly advantageous for achieving a form and friction fit, especially in the case of low overall heights. When assembling stacking plate pairs, the nubs provide an advantageous local force introduction. After a pair of stacking plates has been joined, the forces are internally balanced and in equilibrium with the reaction force of the molded gasket. Furthermore, the number and spacing of the nubs can compensate for or absorb different stiffnesses, e.g. higher or lower gasket reaction forces.

Inner connecting elements are arranged around the through-opening of the frame of the stack plate, whereas outer connecting elements are arranged at outer edges of the frame. Thus a stable connecting may be established between adjacent stack plates, in particular, enclosing the supply channels.

The molded gasket provides a favorable sealing at outside edges of the frames of the stack plates as well as around the supply channels.

The semi-permeable layer separates the exhaust gas flow channel from the supply air flow channel. The semi-permeable layer can be designed, for example, as a PFSA (perfluorosulfonic acid) membrane. Such membranes are also commonly used as proton exchange membranes. The membrane is airtight but permeable to moisture.

The semi-permeable layer may be bonded to the frame by means of a bond, so that the actually gas-tight diaphragm is tightly connected to the stack plate in the area of its outer frame.

The frame of the stack plate can preferably be formed from plastic, for example PA6.6 (polyamide), PPA (polyphtalamide), PPS (polyphenylene sulfide), or TPX (polymethylpentene).

The molded gasket can be a two component-capable conventional or thermoplastic elastomer gasket, e.g. silicone, polyurethane, thermoplastic polyurethane (TPU) or thermoplastic elastomer (TPE).

Advantageously gas-tight flow channels separated from each other in an extremely small installation space in a process-safe manner may be achieved, with the additional integration of a flat semi-permeable layer like a water-permeable membrane. With regard to a favorable water transfer rate, it is advantageous to represent as many channels as possible. This results in the smallest possible channel height.

In contrast to known solutions, the compression of the seal, which is decisive for tightness, can be ensured in a defined manner in various positions. After pre-assembly, the stack device is secured for operation by rigid end plates and several screw connections. The positive locking of the spacer nubs minimizes further settling of the composite and thus ensures that the channel height, which is important for pressure loss and water transfer, does not change.

Thus, the frame incorporates different functions: a load-bearing function by a film back injection molding of the flat semi-permeable membrane to the plastic frame as a hard component, a sealing function by injection of a two component-capable elastomer sealing material as a soft component, a spacing function directly via nubs on the plastic frame and indirectly via the grid-like support member and flow channels represented as flow channels for a wet and dry side of the humidifier.

By integrating an additional row of nubs into the plastic frame a self-supporting humidifier without a housing is realized.

Favorably, a sealing function to the outside is possible via an extended sealing geometry. Pressure stability to the outside is achieved via the plastic frame and integrated lugs for tie rods. Using a square design for the stack plates 90° rotational symmetry enables reduction to one frame type. Integrated inflow ducts eliminates the need for separate hoods and a housing.

Advantageously a cost-effective production, as well as process reliability may be achieved in manufacturing the stack plate device and the humidifier. Various forms of grid-like support members for turbulence generation can be easily inserted. The separation of functions, such as bonding, sealing, holding, allows for improved design and process control. Due to the force- and form-fit, a self-supporting and rigid structure results, already after the first stack layers, which is advantageous for further handling. Complex and expensive gluing of the frame structure may be avoided.

According to a favorable embodiment of the stack plate device, the stack plates may exhibit various base shapes, such as rectangles, hexagons or the like, according to installation space requirements, leading to two or more types of frames for the stack plates. The stack plates may be used for integrating the whole stack plate device as a humidifier. A need for a separate housing may be obsolete.

In particular, each of the stack plate may be rectangularly shaped, in particular quadratically shaped. The adjacent ones of the stack plates may be alternately rotated by 90° around the central axis so that the inflow region of the one stack plate is rotated by 90° against the inflow region of the adjacent stack plate and the outflow region of the one stack plate is rotated by 90° against the outflow region of the adjacent stack plate. Advantageously only one type of stack plates may be used for integrating the whole stack plate device as a humidifier. A need for a separate housing may be obsolete.

According to a favorable embodiment of the stack plate device, the peripheral frame of each of the stack plates may comprise opposing first sides and opposing second sides, the second sides respectively defining the inflow and outflow regions of the first group of the flow channels or the second group of the flow channels, and the inflow and outflow regions comprising ducts interposed between the inner connecting elements. Advantageously, the connecting elements may be placed on the frames of the stack plates on first and second sides for a beneficial introduction of forces for sealing the stack plates to each other.

According to a favorable embodiment of the stack plate device, the inner and outer connecting elements of the adjacent ones of the stack plates may form a frictional fit and a form fit. Due to the force- and form-fit, a self-supporting and rigid structure results, already after the first stack layers, which is advantageous for further handling. Complex and expensive gluing of the frame structure may be avoided.

According to a favorable embodiment of the stack plate device, the inner and outer connecting elements of each of the stack plates may comprise nubs on one of the top and bottom sides of the peripheral frame and comprise receptacles on another of the top and bottom sides, the nubs being configured to engage with corresponding ones of the receptacles when the stack plates are stacked one on top of each other. Advantageous stacking and joining of the stack plates on top of each other may be achieved, resulting in an efficient mounting process for the stack plate device.

According to a favorable embodiment of the stack plate device, the semi-permeable layer may be disposed, with respect to the stacking direction, on the bottom side of each of the stack plates. Thus, flow channels may be realized in an appropriate manner for a beneficial pressure control of the flowing fluids.

According to a favorable embodiment of the stack plate device, the stack plate device may further comprise a grid-like support member closing the through-opening and being disposed, with respect to the stacking direction, on the top side of each of the stack plates. In particular, the grid-like support member may be fixed to the frame by a snap-fit connection or by form fitting nubs or is welded to the frame or is molded to the frame.

The stack seals between the exhaust gas and supply air sides in each layer. Since there is a pressure difference between the supply air and exhaust gas sides, the stack layers may favorably be able to absorb the resulting forces and also additionally support the thin and fragile flat semi-permeable layer with the aid of a grid-like support member. The grid structure of the grid-like support member has the additional function of guiding the fluids as a turbulence insert to the diaphragm of the semi-permeable layer.

According to a favorable embodiment of the stack plate device, the adjacent ones of the stack plates may be connected to one another in a fluid-tight manner in regions outside the inflow and outflow regions. A first gasket may be disposed along an outer circumference of the bottom side of the peripheral frame of each of the stack plates. A second gasket may be interposed between the through-opening and each of the second pair of the four pairwise opposing supply channels of each of the stack plates. Thus, the stack of stacked stack plates may favorably seal between the exhaust gas and supply air sides in each layer.

According to a favorable embodiment of the stack plate device, each of the stack plates may comprise through-holes disposed through the peripheral frame and configured to be a feed through for tie rods by being coaxial when the stack plates are stacked on top of each other. After assembly, the gaskets may be secured by axially screwed end plates, so that the press connections are relieved during operation and may not loosen.

According to a favorable embodiment of the stack plate device, the first gasket may be disposed radially inside the through-holes of each of the stack plates. Thus, the supply channel for the first and second fluid may be sealed in a reliable manner.

In the humidifier, water vapor from the exhaust air of the fuel cell is transferred to the intake air using several flat membranes connected in parallel to the intake air to protect the fuel cell membrane from drying out and to improve the efficiency of the system.

The proposed humidifier represents a flat membrane humidifier. A first, moist or water-rich fluid, for example exhaust gas from fuel cells, flows in one group of flow channels, while a second, dry fluid, for example supply air for the fuel cells, flows in another group of flow channels. The second dry fluid can be moistened by the first fluid via the semi-permeable membranes.

After assembly the stack plate device is finally secured by two end plates with tie rods.

Advantageously, the end plates are modified in such a way that sufficient pressure stability to the outside is guaranteed and all necessary connecting pieces, sensors, tie rods, etc. can be integrated. This also eliminates the need for separate hoods or adapter flanges and seals. The self-supporting housingless humidifier is completely stabilized by tie rods positioned outside the flow chamber.

The height of the humidifier can be varied as required by changing the number of the stack plates to scale the system according to requirements. Only the length and, if necessary, the number of tie rods is to be adjusted. All other components can remain unchanged. The humidifier can also be designed in other basic shapes (e.g. rectangle, hexagon, etc.) and/or with other dimensions in order to meet special installation space requirements. This may mean that two or more frame types are required in some cases.

Advantageously, function integration of the proposed humidifier leads to a reduced number of components resulting in lower costs and a very compact design of the humidifier.

Good scalability may be achieved by changing the stack height, offering an advantage for a standardized market product.

By using one frame type representation of two separate flow chambers via 90° rotations of adjacent stack plates is possible.

The humidifier comprises many identical parts resulting in an efficient manufacturing concept.

According to a favorable embodiment of the humidifier, the each of the first and second inlets and first and second outlets may comprise flow guiding lips being in fluid connection to a respective one of the four pairwise opposing supply channels. Integrated flow guiding lips in the end plates and in the stack plate device may improve the efficiency of the system.

According to a favorable embodiment of the humidifier, the two end plates may be compressible by the tie rods being fed through the through-holes of each of the stack plates. After assembly the stack plate device is finally secured by two end plates with tie rods.

### Brief Description of Drawings

The embodiments together with the above-mentioned and other objects and advantages may best be understood from the following detailed description of the embodiments, but not restricted to the embodiments.
Figure 1 is a top view of a stack plate for a stack plate device according to embodiments.
Figure 2 is a bottom view of the stack plate according to Fig. 1.
Figure 3 is an isometric view of the stack plate according to Fig. 1 from the top side.
Figure 4 is an isometric view of two stacked stack plates from the top side.
Figure 5 is a detailed isometric view from the top side of a stack plate.
Figure 6 is a more detailed isometric view from the top side of a stack plate.
Figure 7 is a detailed isometric view from the bottom side of a stack plate.
Figure 8 is a detailed isometric view from the top side of the two stacked stack plates.
Figure 9 is a more detailed isometric view from the top side of the two stacked stack plates.
Figure 10 is a detailed isometric view from the bottom side of the two stacked stack plates.
Figure 11 is an isometric view of a stack plate device for a humidifier, in particular for a fuel cell system, according to embodiments.
Figure 12 is an isometric view of an end plate of the humidifier according to Fig. 11.
Figure 13 is an isometric view of a humidifier, in particular for a fuel cell system, according to embodiments.
Figure 14 is a sectional view of the humidifier according to Fig. 13.
Figure 15 is another sectional view of the humidifier according to Fig. 13.
Figure 16 is a top view of a humidifier, in particular for a fuel cell system, according to other embodiments.
Figure 17 is a side view of the humidifier according to Fig. 16.
Figure 18 is a side view of a humidifier, in particular for a fuel cell system, according to still other embodiments.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

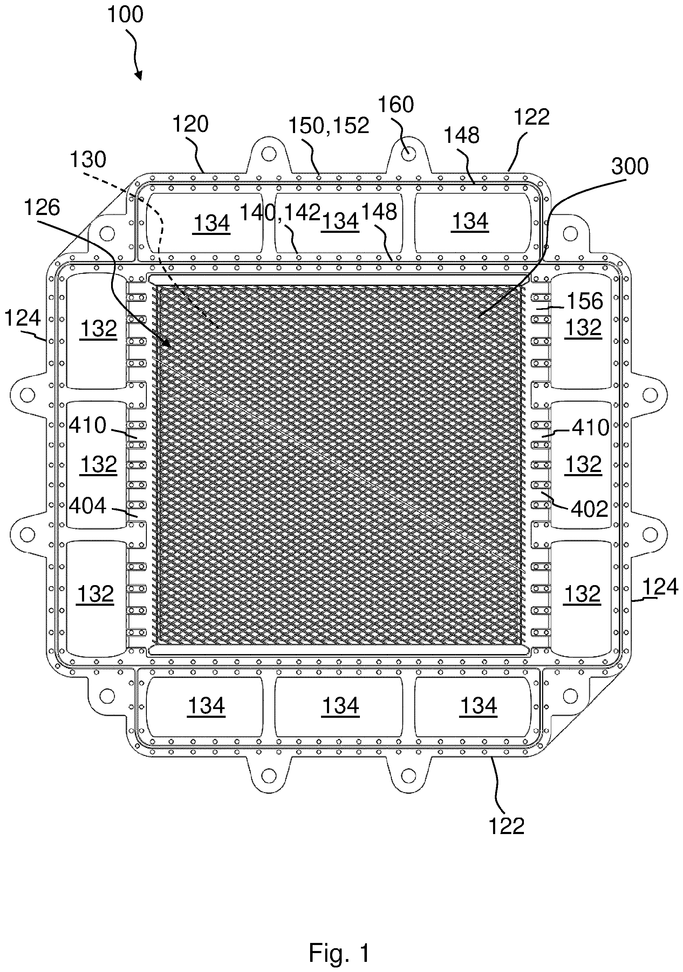

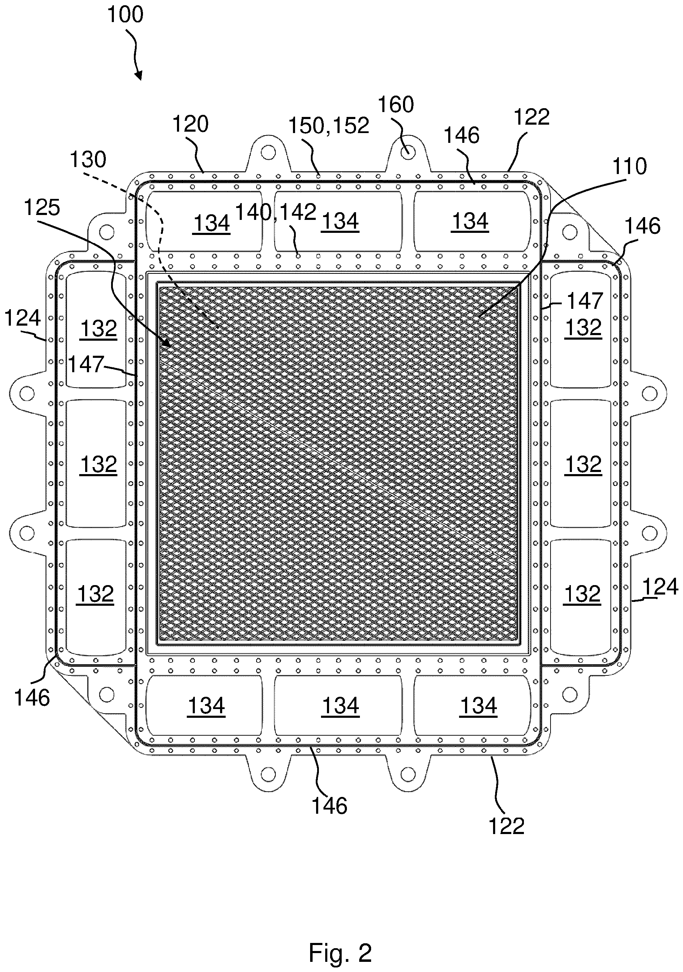

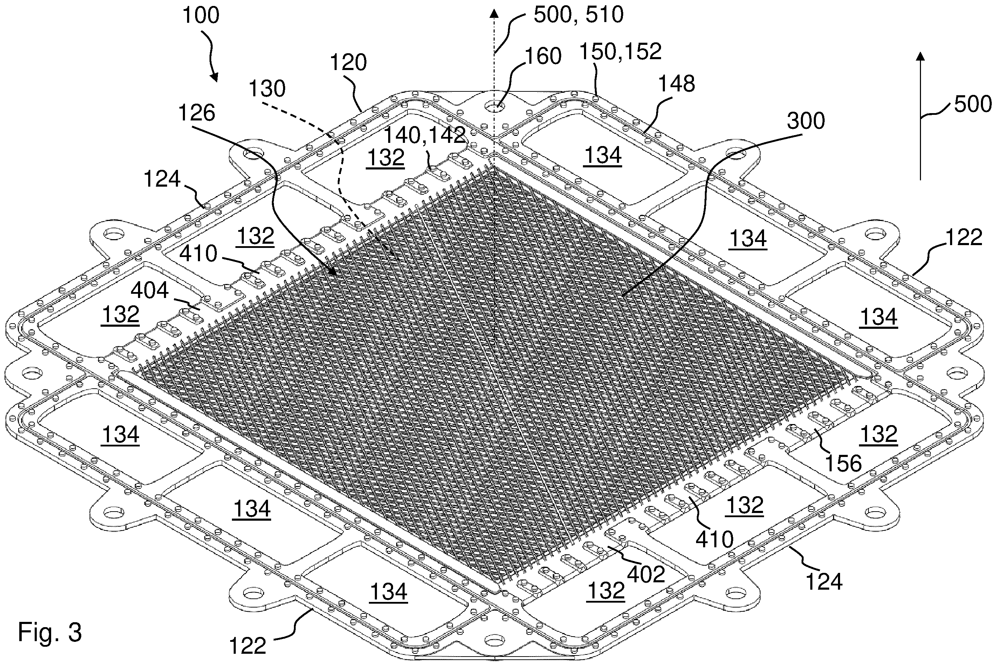

Figure 1 is a top view of a stack plate 100 for a stack plate device 400 according to embodiments. Figure 2 is a bottom view of the stack plate 100, whereas in Figure 3 is an isometric view of the stack plate 100 from the top side.

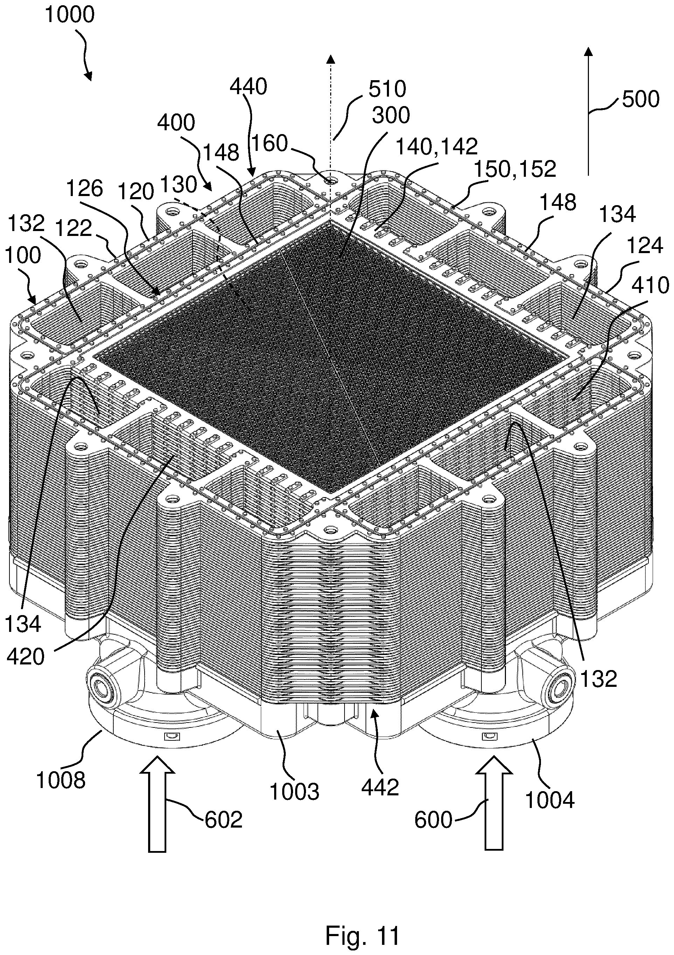

A stack plate device 400 for a humidifier 1000, in particular for a fuel cell system, as is depicted in Figure 11, has a plurality of at least one type of stack plates 100 being stacked one on top of each other in a stacking direction 500. Adjacent stack plates 100 are alternately rotated around a central axis 510, with a top side 126 of one stack plate 100 facing a bottom side 125 of an adjacent stack plate 100.

Each stack plate 100 comprises a peripheral frame 120. The peripheral frame 120 encloses a through-opening 130 and has an inflow region 402 and an opposing outflow region 404 transverse to the stacking direction 500.

At least first and second groups of flow channels 410, 420 are formed in the stacked stack plates 100, being formed transversely to one another and being separated by a semi-permeable layer 110, in particular being separated by a moisture-permeable layer 110.

Three of the alternately successive stack plates 100 enclose two of the flow channels 410, 420. The flow channels 410, 420 provide a cross flow arrangement for a first and a second fluid 600, 602. The first fluid 600 may be a wet exhaust gas of a fuel cell and the second fluid 602 may be the dry supply air of the fuel cell.

Further, the stack plate 100 comprises a grid-like support member 300 closing the through-opening 130.

A grid-like support member 300 is required to support the membrane 110 under differential pressure. This can be pre-assembled in the frame 120 as a separate insert, which is held positively on the plastic frame 120 via two shoulders. It is also possible to attach a grid-like support member 300 via a snap connection, dedicated oversized studs or welded connections in all three directions.

However, it is also possible to produce a grille together with the plastic frame 120 directly in injection molding or injection compression molding process. This would simplify the stack assembly process in particular.

Pairwise opposing supply channels 132, 134 for the first or second fluid 600, 602 are arranged in the peripheral frame 120. On the top side 126 one kind of the opposing supply channels 132 are in fluid connection with the through-opening 130 and the other kind of the pairwise opposing supply channels 134 are sealed against the through-opening 130. On the bottom side 125 the supply channels 132 are sealed against the through-opening 130 and the supply channels 134 are in fluid connection with the through-opening 130.

In the embodiment shown there are three opposing supply channels 132 on each opposing second side 124 of the frame 120 and another three opposing supply channels 134 on the other opposing first sides 122 of the frame 120.

As may be seen from Figure 1, where the top side of the stack plate 100 is shown, the flow channels 410 are realized across the second sides 124 of the frame 120 by connecting the supply channels 132 from one side of the frame 120 via the inflow region 402 of the frame 120 to the outflow region 404 on the other side of the frame 120 to the supply channels 132 on the other side.

On the top side 126 of the stack plate 100 the grooves 148 for receiving the gaskets 146, 147 from the adjacent stack plate 100 are integrated.

The peripheral frame 120 comprises a plurality of inner and outer connecting elements 140, 150. The outer connecting elements 150 are arranged farther away from the through opening 130 than the inner connecting elements 140. The connecting elements 140, 150 of adjacent stack plates 100 are arranged one atop of each other in an interlocking manner.

As in the embodiment shown in the Figures the stack plate 100 is quadratically shaped, the plurality of stack plates 100 may be stacked one on top of each other in the stacking direction 500, alternately rotated by 90° around the central axis 510 so that the inflow region 402 of one stack plate 100 is rotated by 90° against the inflow region 402 of the adjacent stack plate 100 and the outflow region 404 of one stack plate 100 is rotated by 90° against the outflow region 404 of the adjacent stack plate 100.

The frame 120 of the stack plate 100 has opposing first sides 122 and opposing second sides 124 with a plurality of the connecting elements 140, 150. The second sides 124 define inflow and/or outflow regions 402, 404 of the first group of flow channels 410 or the second group of flow channels 420. Hereby, the inflow and/or outflow regions 402, 404 are configured by ducts 156 between the inner connecting elements 140.

The connecting elements 140, 150 of the adjacent stack plates 100 may favorably form a frictional fit and a form fit.

The connecting elements 140, 150 are formed as nubs 142, 152 on one of the top and bottom side 126; 125 of the frame 120 and as corresponding receptacles 144, 154 on the other of the top and bottom side 125; 126. Thus, the nubs 142, 152 engage with corresponding receptacles 144, 154 when the stack plates 100 are stacked one on top of each other.

The semi-permeable layer 110 is arranged, with respect to the stacking direction 500, on the bottom side 125 of the stack plate 100. This is to be seen in Figure 2, where the stack plate 100 is shown from the bottom side 125.

The grid-like support member 300 is placed, with respect to the stacking direction 500, on the top side 126 of the stack plate 100, which may be seen in Figure 1, where the stack plate 100 is shown from the top side 126.

The grid-like support member 300 may be fixed to the frame 120 by a snap-fit connection or by form fitting nubs or is welded to the frame 120 or is molded to the frame 120.

Successive stack plates 100 are connected to one another in a fluid-tight manner in regions outside the inflow or outflow regions 402, 404. For this purpose, a first gasket 146 is provided on an outer circumference at the bottom side 126 of the frame 120, whereas a second gasket 147 is provided between the through-opening 130 and each of the two opposing supply channels 134.

Further, the stack plates 100 comprise through-holes 160 arranged in the frames 120 as a feed through for tie rods 1012, in particular at longitudinal sides 124 of the frames 120. The through-holes 160 are coaxial when the stack plates 100 are stacked on top of each other.

The first gasket 146 is arranged radially inside the through-holes 160 for proper sealing of the supply channels 132, 134.

As may be seen from Figure 1, where the top side of the stack plate 100 is shown, the flow channels 410 are realized across the second sides 124 of the frame 120 by connecting the supply channels 132 from one side of the frame 120 via the inflow region 402 of the frame 120 to the outflow region 404 on the other side of the frame 120 to the supply channels 132 on the other side. The inflow region 402 and outflow region 404 is arranged as ducts 156 for gas flow of the first or second fluid 600, 602. The ducts 156 are formed between the nubs 142 as inner connecting elements 140.

On the top side 126 of the stack plate 100 the grooves 148 for receiving the gaskets 146, 147 from the adjacent stack plate 100 are integrated.

The grid-like support member 300 is arranged on the top side 126 of the stack plate 100.

On the bottom side 125, depicted in Figure 2, the supply channels 132 are enclosed in the first and second gasket 146, 147 thus sealing the supply channels 132. Here, the other supply channels 134 are open to feed the first or second fluid 600, 602 to a flow channel 420 between the bottom side 125 of the stack plate 100 and the top side 126 of the adjacent stack plate 100.

On the bottom side 125 the semi-permeable layer 110 is arranged.

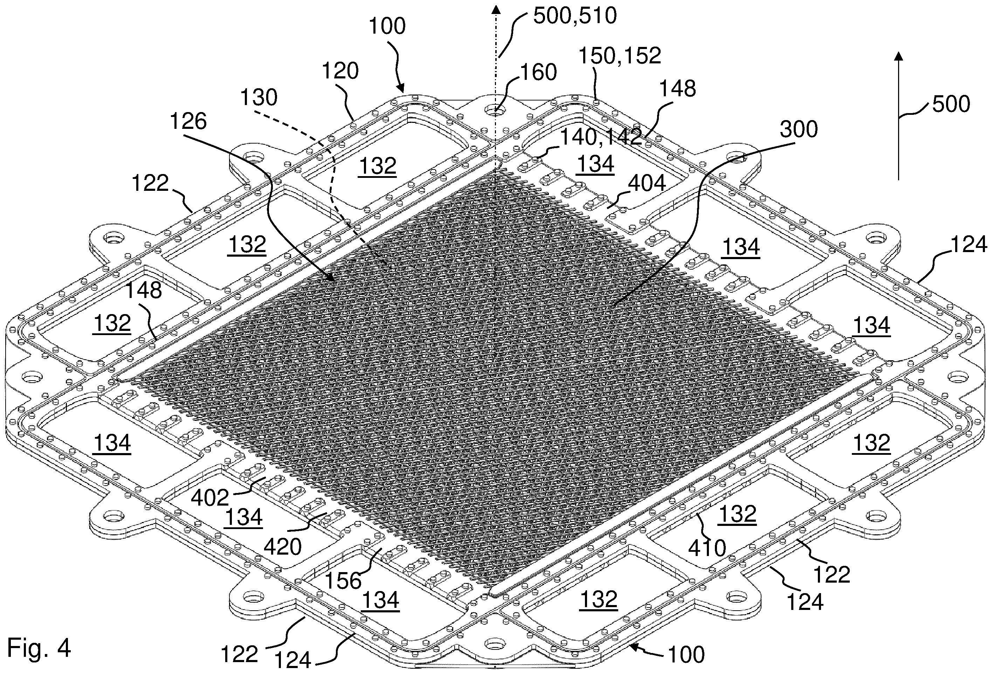

Figure 4 is an isometric view of two stacked stack plates 100 from the top side 126.

The two stack plates 100 are stacked in the stacking direction 500 and in a position rotated by 90° around the central axis 510.

A flow channel 410 is formed connecting the supply channels 132 whereas a flow channel 420 may be formed connecting the supply channels 134 if another stack plate 100 would be stacked on top. The grid-like support member 300 is arranged on top of the underlying, not visible, semi-permeable membrane 110.

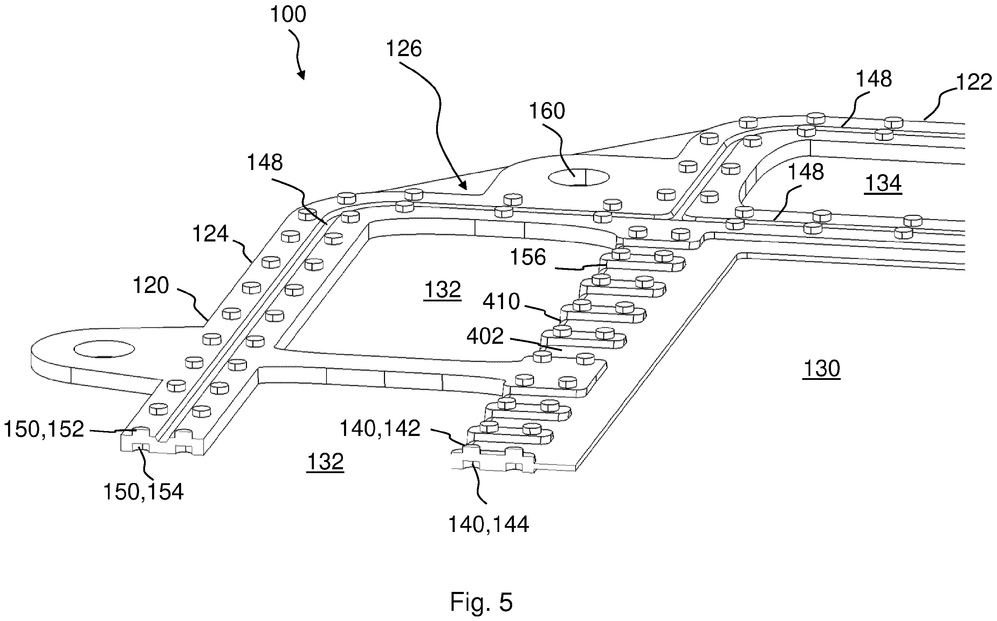

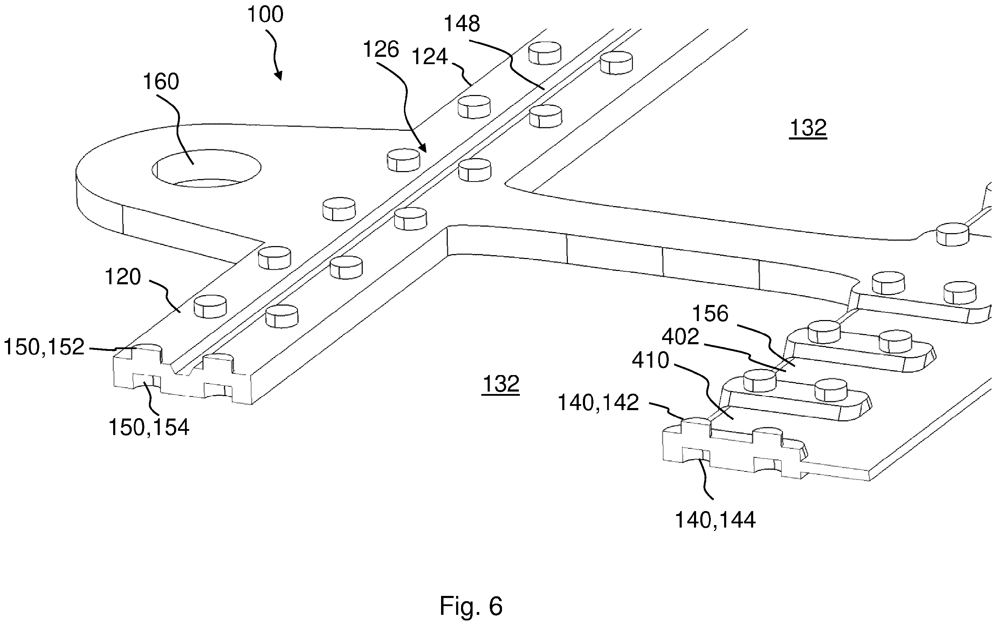

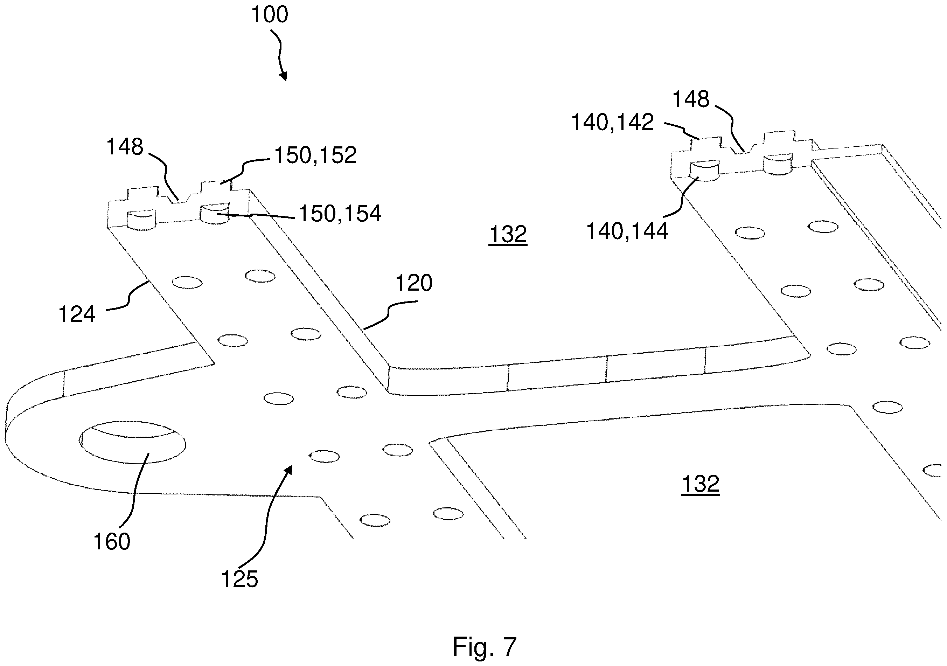

Figure 5 depicts a detailed isometric view from the top side 126 of a stack plate 100. In Figure 6 a more detailed isometric view from the top side 126 of the stack plate 100 is depicted, whereas in Figure 7 a detailed isometric view from the bottom side 125 of the stack plate 100 is shown. The semi-permeable membrane 110 is omitted for clarity reasons so that only the frame 120 is depicted.

In the detailed views the shape of the inner and outer connecting elements 140, 150 represented as nubs 142, 152 at the top side 126 of the frame 120 and as receptacles 144, 154 at the bottom side 125 may be seen. The groove 148 for receiving the gaskets 146, 147 is arranged between nubs 142, 152 along the frame 120.

Ducts 156 in the inflow region 402 of the frame 120 for guiding the first or second fluid 600, 602 to the flow channel 410 are formed between nubs 142 of the inner connecting elements 140.

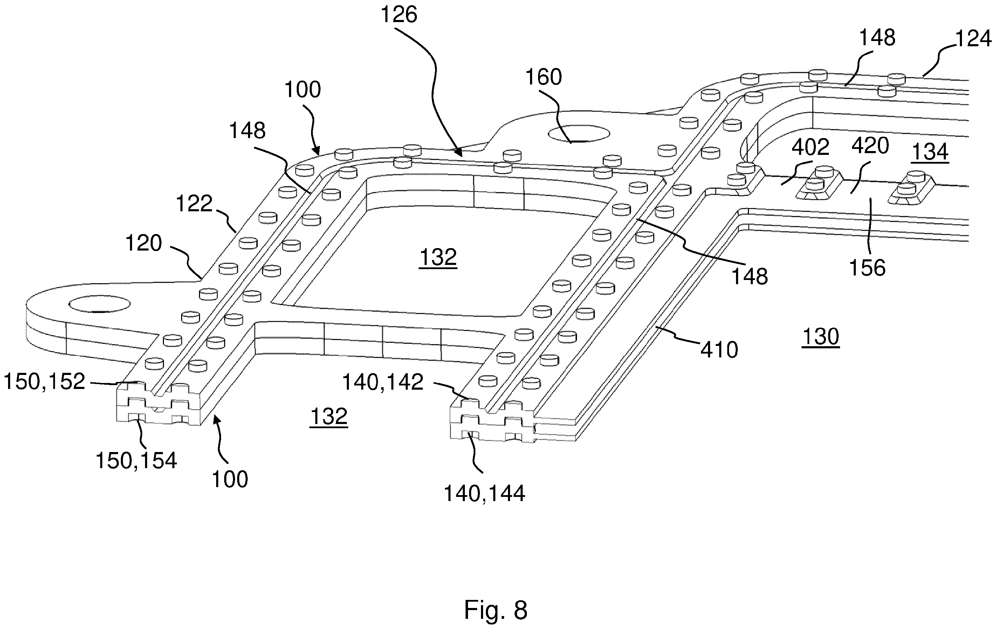

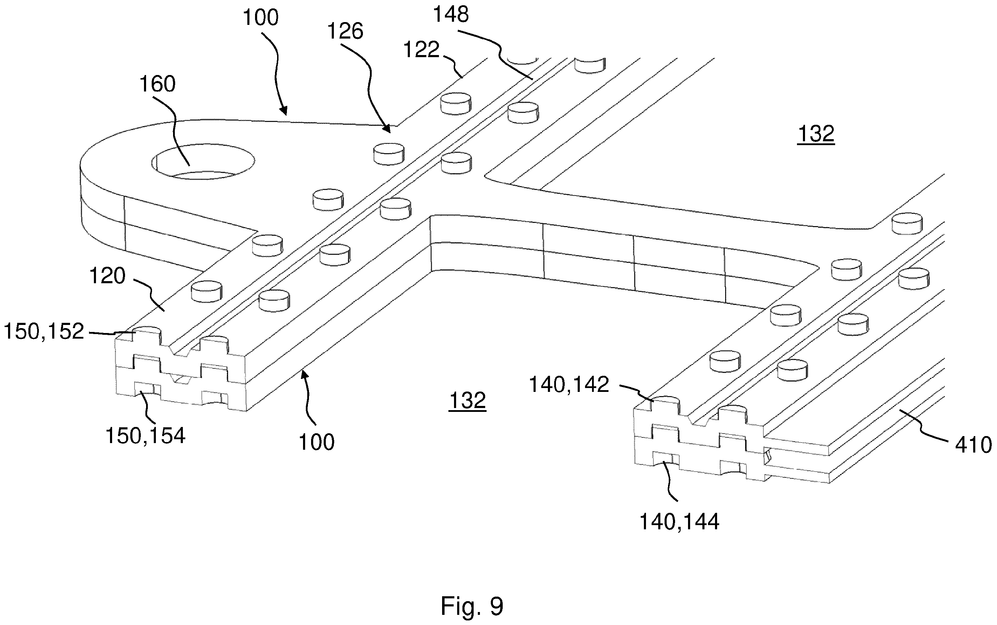

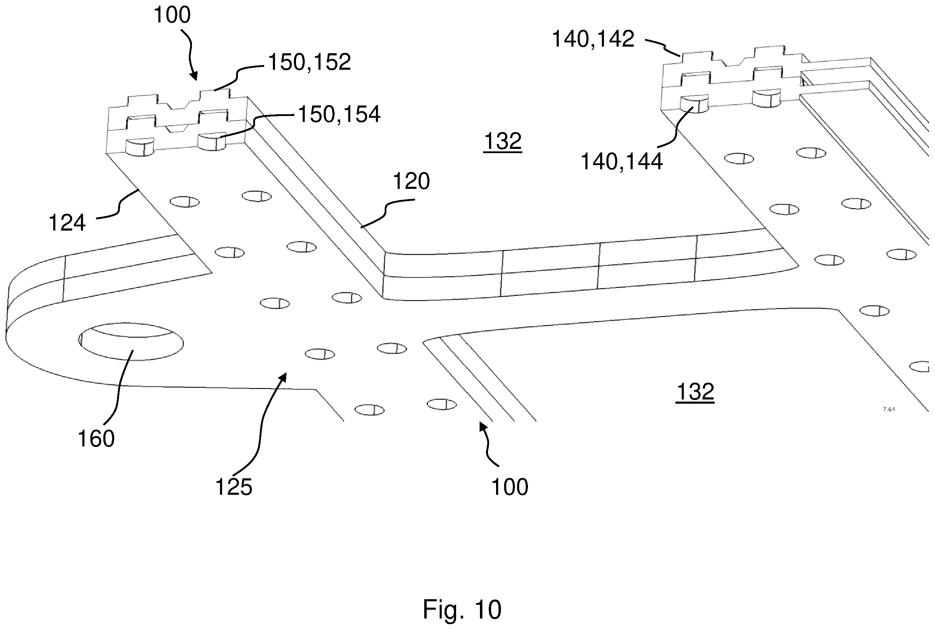

Figure 8 depicts a detailed isometric view from the top side 126 of the two stacked stack plates 100. Figure 9 depicts a more detailed isometric view from the top side 126 of the two stacked stack plates 100, whereas in Figure 10 a detailed isometric view from the bottom side 125 of the two stacked stack plates 100 is shown.

The nubs 142, 152 of the inner and outer connecting elements 140, 150 of the lower stacking plate 100 are inserted into the receptacles 144, 154 of the upper stacking plate 100. Between the two stacking plates 100 the flow channel 410 is arranged between the two stacking plates 100.

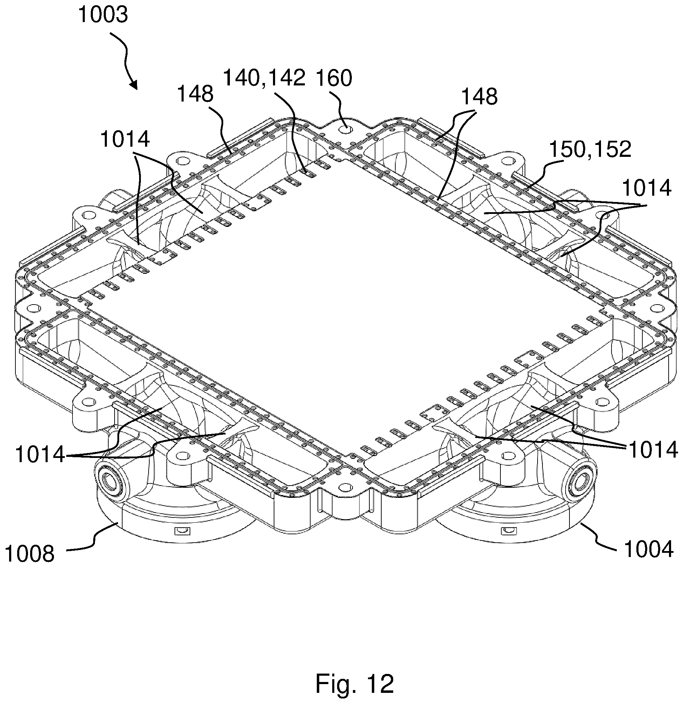

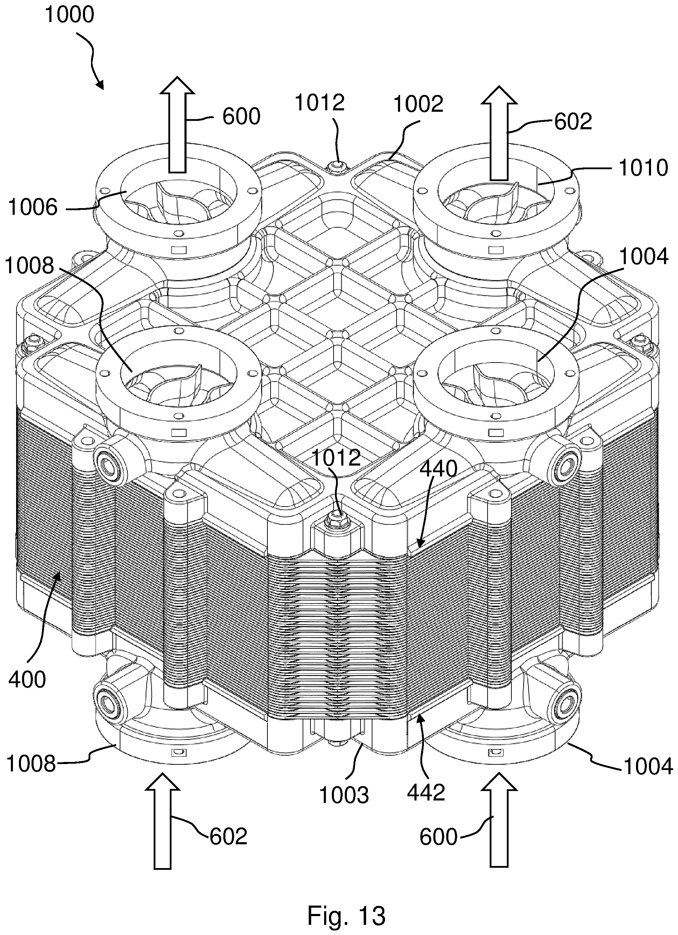

Figure 11 is an isometric view of a stack plate device 400 for a humidifier 1000, in particular for a fuel cell system, according to embodiments. Figure 12 is an isometric view of an end plate 1003 of the humidifier 1000 according to Fig. 11, whereas Figure 13 is an isometric view of the humidifier 1000 according to embodiments.

The stack plate device 400 comprises a plurality of stack plates 100, which are stacked one on top of each other in a stacking direction 500, wherein adjacent stack plates 100 are alternately rotated around a central axis 510.

As in the embodiment shown in the Figures the stack plate 100 are quadratically shaped, the plurality of stack plates 100 is stacked one on top of each other in the stacking direction 500, alternately rotated by 90° around the central axis 510 so that the inflow region 402 of one stack plate 100 is rotated by 90° against the inflow region 402 of the adjacent stack plate 100 and the outflow region 404 of one stack plate 100 is rotated by 90° against the outflow region 404 of the adjacent stack plate 100.

The stack plate device 400 is enclosed at both ends 440, 442 in the stacking direction 500 by two end plates 1002, 1003, each having at least one inlet 1004 for a first fluid 600, in particular exhaust gas from the fuel cell system, an inlet 1008 for a second fluid 602, in particular supply air to the fuel cell system, an outlet 1006 for the first fluid 600 and an outlet 1010 for the second fluid 602.

In Figure 11 the upper end plate 1002 is omitted, thus, the uppermost stack plate 100 of the stack plate device 400 is visible with the top side 126 of the stack plate 100 on top as depicted in Figure 1. The outlets 1006, 1010 are not visible in this perspective.

Three of the alternately successive stack plates 100 each enclose a first and a second group of flow channels 410, 420. The flow channels 410, 420 provide a cross flow arrangement for the first and second fluid 600, 602. The flow channels 410, 420 are separated by semi-permeable layers 110, in particular moisture-permeable layers 110.

Peripheral frames 120 of the stack plates 100 comprise a plurality of inner and outer connecting elements 140, 150. The outer connecting elements 150 are arranged farther away from the through opening 130 than the inner connecting elements 140. The connecting elements 140, 150 of adjacent stack plates 100 are arranged one atop of each other in an interlocking manner.

The peripheral frames 120 on a circumference enclose pairwise opposing supply channels 132, 134 for the first or second fluid 600, 602. On the top side 126 the pairwise opposing supply channels 132 are in fluid connection with the through-opening 130 and the other two pairwise opposing supply channels 134 are sealed against the through-opening 130. On the bottom side 125, not visible, the supply channels 132 are sealed against the through-opening 130 and the supply channels 134 are in fluid connection with the through-opening 130.

The first group of flow channels 410 is fluidically connected to the supply channels 132 and the second group of flow channels 420 is fluidically connected to the supply channels 134.

The pairwise opposing supply channels 132 are arranged between the inlet 1004 and the outlet 1006 (see Figure 13) for the first fluid 600 and the other two of the opposing supply channels 134 are arranged between the inlet 1008 and the outlet 1010 for the second fluid 602.

Thus a cross flow of the first fluid 600 may be established through the stack plate device 400 from the inlet 1004 along the flow channels 410 to the outlet 1006. Another cross flow of the second fluid 602 may be established through the stack plate device 400 from the inlet 1008 along the flow channels 410 to the outlet 1010. Flow of the first and second fluid 600, 602 is indicated by arrows in the Figures.

In Figure 11, with the upper end plate 1002 omitted, the open supply channels 132, 134 for guidance of the first and second fluid 600, 602 to the flow channels 410, 420 on a circumference of the through-opening 130 of the stack plates 100 is visible.

The end plate 1003, shown in Figure 12, serves for closing the stack plate device 400 at the lower end 442. For this purpose the end plate 1003 is equipped with the corresponding inner and outer connecting members 140, 150 as well as with a groove 148 for accommodating the gaskets 146, 147 of the lowest stack plate 100 of the stack plate device 400, just like a normal stack plate 100.

The end plates 1002, 1003 also serve for guiding the fluid flow of the first and second fluid 600, 602 from the inlets 1004, 1008 to the supply channels 132, 134 and on the other side from the supply channels 132, 134 to the outlets 1006, 1010. Therefore the end plates 1002, 1003 are equipped with flow guiding lips 1014.

The end plates 1002, 1003 can be made of plastic (injection molding) or metal (die-cast aluminum, 3D printing, CNC), whereby one-piece or multi-piece variants are conceivable for more functional integration. In the case of a multi-part plastic end plate 1002, 1003, for example, it is possible to use customized inlets 1004, 1008 and outlets 1006, 1010 via a suitable welded connection.

In Figure 13, where the assembled humidifier 1000 is depicted, all possible inlets 1004, 1008 as well as all possible outlets 1006, 1010 are visible. As the depicted design of the inlets 1004, 1008 and outlets 1006, 1010 of the humidifier 1000 is symmetric, for proper functions the inlets 1004, 1008 and outlets 1006, 1010 on either end plate 1002, 1003 may be closed by plates, not depicted.

The two end plates 1002, 1003 are compressed by tie rods 1012 which are fed through through-holes 160 arranged in the frames 120, and which are coaxial when the stack plates 100 are stacked on top of each other.

Inflow or outflow of the stack plates 100 is possible from two sides at the same time or only from one side. This applies to both flow channels 410, 420 (wet and dry side).

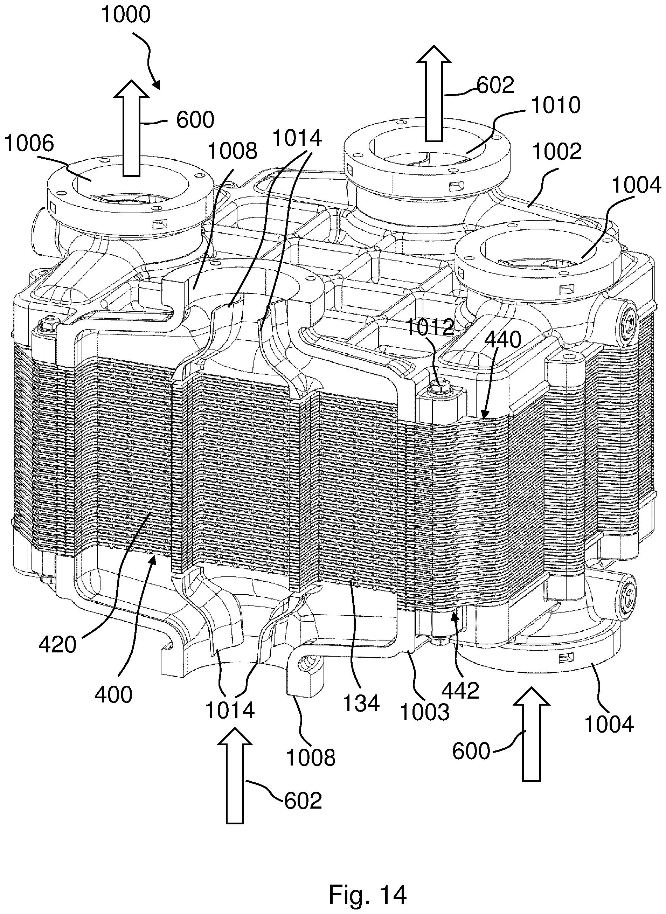

The inlets 1004, 1008 and outlets 1006, 1010 comprise flow guiding lips 1014 which are in fluid connection to the supply channels 132, 134, visible in Figure 14, which is a sectional view of the humidifier 1000 according to Fig. 13. Thus, an efficiency of the humidifier 1000 may be increased.

The frames 120 of the stack plates 100 are cut in this view as well as the inlet 1008 of the end plates 1002, 1003.

Thus, the function of the flow guiding lips 1014 arranged in the inlets 1008 of the end plates 1002, 1003 may better be understood. The flow of the second fluid 602 is guided directly into the supply channels 134 for efficient supply of the fluid 602 to the flow channels 420 through the stack plate device 400.

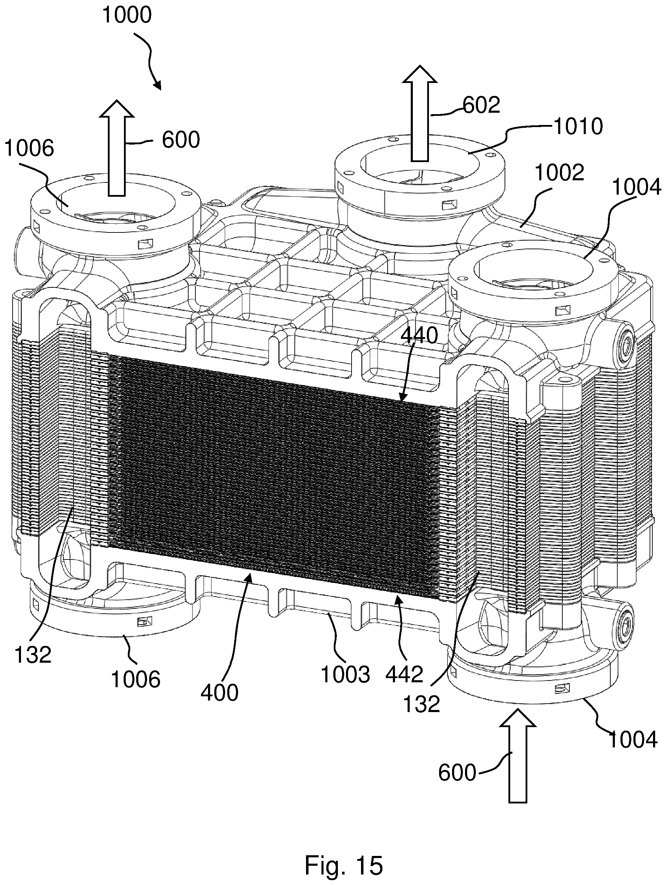

Figure 15 is another sectional view of the humidifier 1000 according to Fig. 13.

The section in this Figure is more towards the center of the stack plate device 400 such that the supply channels 132 on the other sides of the stack plate device 400 are visible.

The inlets 1004, 1008 and outlet 1006, 1010, as well as the wet and dry sides may be determined at one end plate 1002, 1003 via the connection spigots. Parallel flows are possible with an opposing connection on the opposite end plate 1002, 1003.

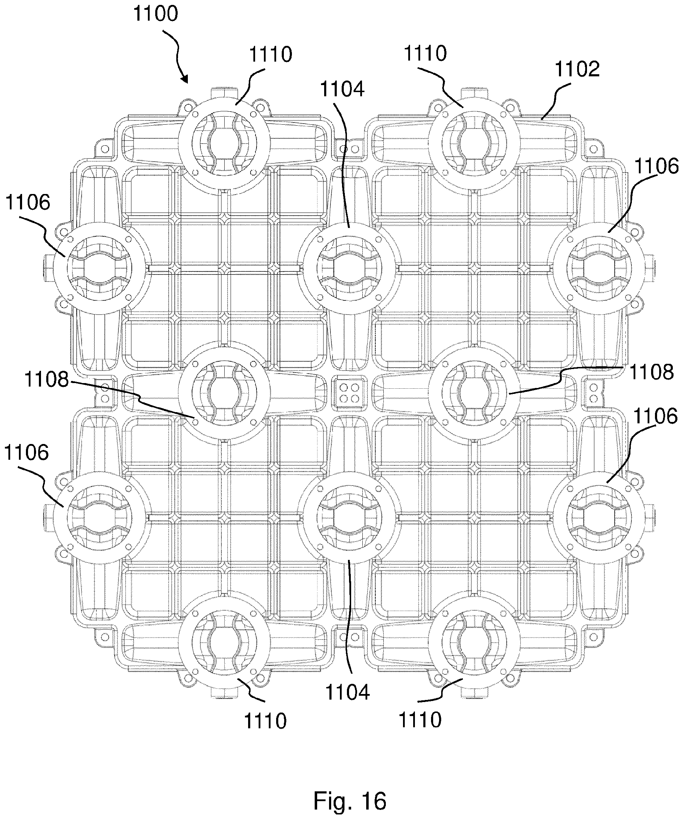

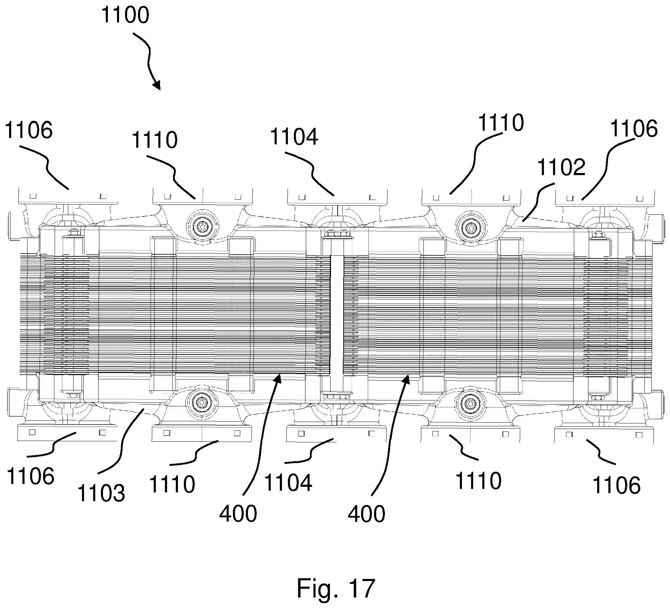

Figure 16 is a top view of a humidifier 1100, in particular for a fuel cell system, according to other embodiments. Figure 17 is a side view of the humidifier 1100 according to Fig. 16.

Referring to Figs. 16 and 17, the humidifier 1100 includes parallel alignment of individual stack plates devices 400 interposed between modified end plates 1102 and 1103. Each of the end plates 1102 and 1103 include inlets 1104 for the first fluid 600, in particular the exhaust gas from the fuel cell system, inlets 1108 for the second fluid 602, in particular the supply air to the fuel cell system, outlets 1106 for the first fluid 600, and outlets 1110 for the second fluid 602. Each pair of the parallel-aligned individual stack plate devices 400 shares one pair of the inlets 1104 or the inlets 1108 of the end plates 1102 and 1103, respectively. Each of the parallel-aligned individual stack plate devices 400 uses one pair of the outlets 1106 and 1110 of the end plates 1102 and 1103, respectively.

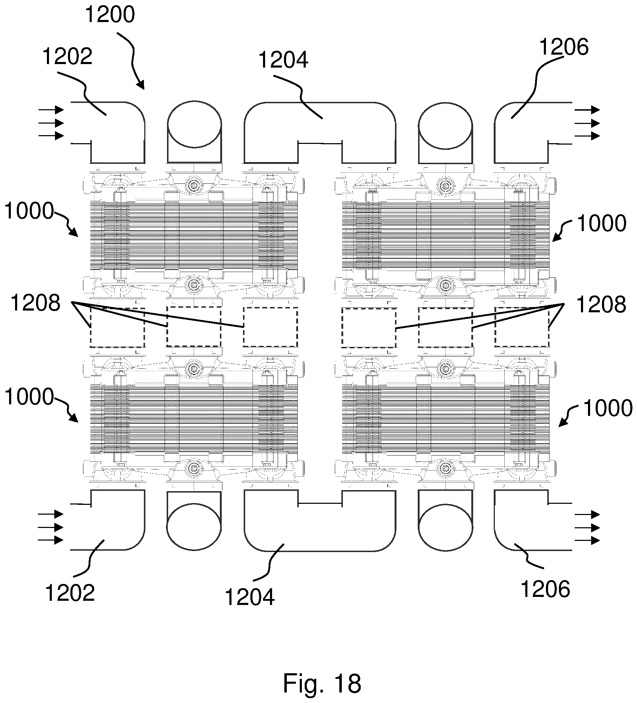

Figure 18 is a side view of a humidifier 1200, in particular for a fuel cell system, according to still other embodiments.

Referring to Fig. 18, the humidifier 1200 includes parallel and/or series alignment of individual humidifiers 1000, using connecting ducts 1204 and 1208 within a rack. In detail, the connecting ducts 1204 respectively connect two pairs of the humidifiers 1000 in parallel, while the connecting ducts 1208 respectively connect two pairs of the humidifiers 1000 in series. Each of the connecting ducts 1204 and 1208 connect one inlet or outlet 1004, 1006, 1008, or 1010 of one humidifier 1000 to another inlet or outlet 1004, 1006, 1008, or 1010 of another humidifier 1000.

The humidifier 1200 further includes inlets 1202 for the first or second fluid, and outlets 1206 for the first or second fluid. Each of the inlets 1202 and the outlets 1206 is connected to one inlet or outlet 1004, 1006, 1008, or 1010 of one humidifier 1000.

### Reference Signs List

- 100: stack plate
- 110: semi-permeable layer
- 120: frame
- 122: first side
- 124: second side
- 125: bottom side
- 126: top side
- 130: through-opening
- 132: supply channel
- 134: supply channel
- 140: inner connecting element
- 142: nub
- 144: receptacle
- 146: first gasket
- 147: second gasket
- 148: groove
- 150: outer connecting element
- 152: nub
- 154: receptacle
- 156: duct
- 160: through-hole
- 300: grid-like support member
- 400: stack plate device
- 402: inflow region
- 404: outflow region
- 410: flow channel
- 420: flow channel
- 440: end
- 442: end
- 500: stacking direction
- 510: central axis
- 600: first fluid (exhaust gas)
- 602: second fluid (supply air)
- 1000: humidifier
- 1002: end plate
- 1003: end plate
- 1004: inlet first fluid
- 1006: outlet first fluid
- 1008: inlet second fluid
- 1010: outlet second fluid
- 1012: tie rod
- 1014: flow guiding lip
- 1100: humidifier
- 1102: end plate
- 1103: end plate
- 1104: inlet first fluid
- 1106: outlet first fluid
- 1108: inlet second fluid
- 1110: outlet second fluid
- 1200: humidifier
- 1202: inlet
- 1204: connecting duct
- 1206: outlet
- 1208: connecting duct

## Claims

1. A stack plate device (400) for a humidifier (1000), in particular for a fuel cell system, the stack plate device (400) comprising:
stack plates (100) being stacked one on top of each other in a stacking direction (500), adjacent ones of the stack plates (100) being alternately rotated around a central axis (510), with a top side (126) of one stack plate (100) facing a bottom side (125) of an adjacent stack plate (100), each of the stack plates (100) comprising a peripheral frame (120), the peripheral frame (120) enclosing a through-opening (130) and comprising an inflow region (402) and an outflow region (404) opposing the inflow region (402) that are transverse to the stacking direction (500),
wherein a first group and a second group of flow channels (410, 420) are disposed in the stacked stack plates (100) and transversely to one another; and
a semi-permeable layer (110) separating each pair of the flow channels (410, 420),
wherein three alternately successive ones of the stack plates (100) enclose two of the flow channels (410, 420), the flow channels (410, 420) providing a cross flow arrangement for a first fluid (600) and a second fluid (602),
wherein each of the stack plates (100) further comprises four pairwise opposing supply channels (132, 134) respectively for the first fluid (600) and the second fluid (602), the four pairwise opposing supply channels (132, 134) being disposed through the peripheral frame (120), a first pair of the four pairwise opposing supply channels (132) being in fluid connection with the through-opening (130) on the top side (126), and a second pair of the four pairwise opposing supply channels (134) being sealed against the through-opening (130) and vice versa on the bottom side (125), and
wherein the peripheral frame (120) of each of the stack plates (100) comprises inner connecting elements (140) and outer connecting elements (150), the outer connecting elements (150) being arranged farther away from the through opening (130) than the inner connecting elements (140), and the inner and outer connecting elements (140, 150) of the adjacent ones of the stack plates (100) being arranged one on top of each other in an interlocking manner.

2. The stack plate device (400) according to claim 1, wherein each of the stack plates (100) is quadratically shaped, and
wherein the adjacent ones of the stack plates (100) is alternately rotated by 90° around the central axis (510) so that the inflow region (402) of the one stack plate (100) is rotated by 90° against the inflow region (402) of the adjacent stack plate (100) and the outflow region (404) of the one stack plate (100) is rotated by 90° against the outflow region (404) of the adjacent stack plate (100).

3. The stack plate device (400) according to claim 1 or 2, wherein the peripheral frame (120) of each of the stack plate (100) comprises opposing first sides (122) and opposing second sides (124), the second sides (124) respectively defining the inflow and outflow regions (402, 404) of the first group of the flow channels (410) or the second group of the flow channels (420), and the inflow and outflow regions (402, 404) comprising ducts (156) interposed between the inner connecting elements (140).

4. The stack plate device (400) according to any one of preceding claims, wherein the inner and outer connecting elements (140, 150) of the adjacent ones of the stack plates (100) form a frictional fit and a form fit.

5. The stack plate device (400) according to any one of preceding claims, wherein the inner and outer connecting elements (140, 150) of each of the stack plates (100) comprise nubs (142, 152) on one of the top and bottom sides (126, 125) of the peripheral frame (120) and comprise receptacles (144, 154) on another of the top and bottom sides (125, 126), the nubs (142, 152) being configured to engage with corresponding ones of the receptacles (144, 154) when the stack plates (100) are stacked one on top of each other.

6. The stack plate device (400) according to any one of preceding claims, wherein the semi-permeable layer (110) is disposed, with respect to the stacking direction (500), on the bottom side (125) of each of the stack plates (100).

7. The stack plate device (400) according to any one of preceding claims, further comprising a grid-like support member (300) closing the through-opening (130) and being disposed, with respect to the stacking direction (500), on the top side (126) of each of the stack plates (100).

8. The stack plate device (400) according to any one of preceding claims, wherein the adjacent ones of the stack plates (100) are connected to one another in a fluid-tight manner in regions outside the inflow and outflow regions (402, 404),
wherein a first gasket (146) is disposed along an outer circumference of the bottom side (126) of the peripheral frame (120) of each of the stack plates (100), and
wherein a second gasket (147) is interposed between the through-opening (130) and each of the second pair of the four pairwise opposing supply channels (134) of each of the stack plates (100).

9. The stack plate device (400) according to claim 8, wherein each of the stack plates (100) comprises through-holes (160) disposed through the peripheral frame (120) and configured to be a feed through for tie rods (1012) by being coaxial when the stack plates (100) are stacked on top of each other.

10. The stack plate device (400) according to claim 9, wherein the first gasket (146) is disposed radially inside the through-holes (160) of each of the stack plates (100).

11. A humidifier (1000) for a fuel cell system, the humidifier (1000) comprising:
the stack plate device (400) according to any one of preceding claims; and
two end plates (1002, 1003) respectively enclosing the stack plate device (400) at both ends (440, 442) in the stacking direction (500), each of the two end plates (1002, 1003) comprising a first inlet (1004) for the first fluid (600), in particular exhaust gas from the fuel cell system, a second inlet (1008) for the second fluid (602), in particular supply air to the fuel cell system, a first outlet (1006) for the first fluid (600), and a second outlet (1010) for the second fluid (602),
wherein the first group of the flow channels (410) is fluidically connected to the first pair of the four pairwise opposing supply channels (132), and the second group of the flow channels (420) is fluidically connected to the second pair of the four pairwise opposing supply channels (134), and
wherein the first pair of the four pairwise opposing supply channels (132) are interposed between the first inlet (1004) and the first outlet (1006) for the first fluid (600), and the second pair of the four pairwise opposing supply channels (134) are interposed between the second inlet (1008) and the second outlet (1010) for the second fluid (602).

12. The humidifier (1000) according to claim 11, wherein each of the first and second inlets (1004, 1008) and first and second outlets (1006, 1010) comprises flow guiding lips (1014) being in fluid connection to a respective one of the four pairwise opposing supply channels (132, 134).

13. The humidifier (1000) according to claim 11 or 12, wherein the two end plates (1002, 1003) are compressible by the tie rods (1012) being fed through the through-holes (160) of each of the stack plates (100).

14. A humidifier (1200) for a fuel cell system, the humidifier comprising:
humidifiers (1000) according to any one of claims 11 to 13, the humidifiers (1000) being in parallel and series alignment;
connecting ducts (1204) respectively connecting at least one pair of the humidifiers (1000) in parallel; and
connecting ducts (1208) respectively connecting at least one pair of the humidifiers (1000) in series,
wherein each of the connecting ducts (1204, 1208) connect one inlet or outlet (1004, 1006, 1008, or 1010) of one of the humidifiers (1000) to another inlet or outlet (1004, 1006, 1008, or 1010) of another one of the humidifiers (1000).

15. A humidifier (1100) for a fuel cell system, the humidifier (1100) comprising:
stack plate devices (400) according to any one of claims 1 to 10, the stack plate devices (400) being in parallel alignment; and
two end plates (1102, 1103) respectively enclosing the stack plate devices (400), each of the two end plates (1102, 1103) comprising first inlets (1104) for the first fluid (600), in particular exhaust gas from the fuel cell system, second inlet (1108) for the second fluid (602), in particular supply air to the fuel cell system, first outlets (1106) for the first fluid (600), and second outlets (1110) for the second fluid (602),
wherein each pair of the stack plate devices (400) shares one pair of the first inlets (1104) or the second inlets (1108) of the end plates (1102, 1103), respectively, and
wherein each of the stack plate devices (400) uses one pair of the first and second outlets (1106, 1110) of the end plates (1102, 1103), respectively.
